# EUROPEAN PATENT APPLICATION

(11) **EP 4 732 989 A2**
(43) Date of publication of application: **29.04.2026**
(21) Application number: 25211056.4
(22) Date of filing: 24.10.2025
(51) Int. Cl.: B23P 9/04, B24B 39/00, B24C 5/00, C21D 7/06

(54) **PEENING SYSTEM FOR INNER SURFACE OF HOLLOW SPIRAL EXTENSION MEMBER AND METHOD FOR PEENING OF HOLLOW SPIRAL EXTENSION MEMBER USING THE SAME**

(30) Priority: 28.10.2024 KR 20240148882; 17.09.2025 KR 20250133576
(71) Applicant: Industry-Academic Cooperation Foundation Dankook University, Yongin-si, Gyeonggi-do 16890 (KR)
(72) Inventor: JUNG, Sunghwan, 14076 Gyeonggi-do (KR)
(74) Representative: AWA Sweden AB

(57) **Abstract**

The present disclosure discloses a system for peening an inner surface of a hollow spiral extension member (E), the system including a configuration that supplies an ultrasonic transmission medium (M) for ultrasonic cavitation to a peening target region of a target. The system for peening an inner surface includes a medium tank (110) configured to accommodate an ultrasonic transmission medium (M), a connection pipe (120) respectively connected to a hollow spiral extension member (E) and the medium tank (110), the connection pipe (120) being configured to form a movement flow path for the ultrasonic transmission medium (M) from the medium tank (110) into the hollow spiral extension member (E), a pressure adjuster (130) connected to the medium tank (110) and configured to control a flow of the ultrasonic transmission medium (M) by adjusting pressure in the medium tank (110), and an ultrasonic generator (140) installed in the connection pipe (120) and configured to generate ultrasonic waves toward the inside of the hollow spiral extension member (E) in the connection pipe (120) so that ultrasonic cavitation peening is performed on an inner surface of the hollow spiral extension member (E) in a state in which the inside of the hollow spiral extension member (E) is filled with the ultrasonic transmission medium (M).

## Description

### BACKGROUND OF THE INVENTION

### Field of the Invention

The present disclosure relates to a system for peening an inner surface of a hollow spiral extension member, the system being configured to peen an inner surface of a target by means of ultrasonic cavitation, and a method of peening a hollow spiral extension member using the same, and more particularly, to a system for peening an inner surface of a hollow spiral extension member, the system including a configuration for supplying an ultrasonic transmission medium for ultrasonic cavitation to a peening target region of a target, and a method of peening a hollow spiral extension member using the same.

### Description of the Related Art

A hollow spiral pipe has a cross-sectional area reduced by a hollow region, which enables weight reduction. Meanwhile, a hollow spiral extension member, to which a repetitive load is applied, requires fatigue strength implemented at a predetermined level or higher not only on a wall (outer surface), but also on an inner wall (inner surface). In this case, a peening operation may be performed to implement the fatigue strength of the hollow spiral pipe at a predetermined level or higher.

For example, because a heat exchange device, which is provided in the form of a spiral pipe installed in a power generation facility, repeatedly receives thermal stress, the peening operation may be required to be performed on the outer and inner walls of the pipe in order to implement the fatigue strength. Further, the peening operation may also be required to reduce residual tensile stress applied to the inner surfaces of various nozzles connected to nuclear reactor pressure vessels.

Peening refers to a surface treatment method of improving residual stress and fatigue strength by imparting plastic deformation by applying impact to a surface layer of a material. Shot peening, which is often used, refers to a method of increasing fatigue strength of a pipe by applying residual compressive stress to the outer and inner surfaces of the pipe that has been subjected to shot peening by performing hammering by projecting small-sized steel-material balls, which are called shot balls, onto the outer and inner surfaces of the pipe. The residual compressive stress refers to stress remaining in a material even in a state in which all external forces are removed after the material is deformed by plastic deformation, and the residual compressive stress, which is imparted to a surface of a treated object by means of the peening operation, may extend a fatigue lifespan of the treated object.

However, in case that a hollow cross-section formed in the pipe is extremely small or the pipe has a complicated shape including a curved portion or the like, it is not easy to put such into a device for shot peening. In addition, besides shot peening, water jet peening or laser peening is also difficult to implement as pipe inner surface peening with restricted accessibility.

Ultrasonic cavitation peening may be applied to the above-mentioned operation of peening the inner surface of the hollow spiral pipe. Ultrasonic cavitation peening refers to a method of peening an inner surface of a hollow spiral pipe by means of a process of generating ultrasonic acoustic fields in a hollow portion by an ultrasonic probe part inserted into the hollow spiral pipe and generating and exploding an ultrasonic cavity by the acoustic fields.

Meanwhile, for ultrasonic cavitation peening, the development of a method for more efficiently supplying, to the peening target, an ultrasonic transmission medium in which cavities are generated by ultrasonic waves for the peening target, may be considered.

### SUMMARY OF THE INVENTION

One object of the present disclosure is to provide a system for peening an inner surface of a hollow spiral extension member, the system being capable of more efficiently supplying an ultrasonic transmission medium for ultrasonic cavitation into a peening target, and a method of peening a hollow spiral extension member using the same.

Another object of the present disclosure is to provide a system for peening an inner surface of a hollow spiral extension member, the system being capable of synchronizing phases of ultrasonic waves, which are generated by a plurality of ultrasonic probes, and superimposing the ultrasonic waves in a waveguide without excessively increasing an excitation displacement of the ultrasonic probe during ultrasonic cavitation peening, thereby minimizing an unnecessary cavitation phenomenon (i.e., a phenomenon that weakens the generated ultrasonic strength) occurring around the excitation probe, minimizing a phenomenon in which ultrasonic strength is weakened by cavitation interference when the ultrasonic waves pass through a cavitation region, and allowing the ultrasonic waves with the maintained predetermined strength to reach a portion of a peening target, and a method of peening a hollow spiral extension member using the same.

Still another object of the present disclosure is to provide a system for peening an inner surface of a hollow spiral extension member, the system being capable of preventing a deterioration in peening efficiency caused by restriction or interruption of propagation of ultrasonic waves by smoothly discharging macro-bubbles, which are generated during a process of peening a vertical pipe inner surface by using ultrasonic cavitation, to the outside, and a method of peening a hollow spiral extension member using the same.

In order to achieve the above-mentioned objects, a system for peening an inner surface of a hollow spiral extension member according to an embodiment of the present disclosure includes: a medium tank configured to accommodate an ultrasonic transmission medium; a connection pipe having one end connected to a hollow spiral extension member, and the other end connected to the medium tank, the connection pipe being configured to form a movement flow path for the ultrasonic transmission medium from the medium tank into the hollow spiral extension member; a pressure adjuster connected to the medium tank and configured to control a flow of the ultrasonic transmission medium by adjusting pressure in the medium tank; and an ultrasonic generator installed in the connection pipe and configured to generate ultrasonic waves toward the inside of the hollow spiral extension member in the connection pipe so that ultrasonic cavitation peening is performed on an inner surface of the hollow spiral extension member in a state in which the inside of the hollow spiral extension member is filled with the ultrasonic transmission medium.

According to the example related to the present disclosure, a connecting tube may be installed at one end of the connection pipe and detachably connected to a lower end of the hollow spiral extension member.

According to the example related to the present disclosure, an ultrasonic probe of the ultrasonic generator, which generates ultrasonic waves, may be disposed to be directed toward an opening of the connecting tube.

According to the example related to the present disclosure, an upper end of the medium tank may be positioned to be lower than the connecting tube, and the other end of the connection pipe may be connected to a bottom portion of the medium tank so that the ultrasonic transmission medium is completely discharged from the hollow spiral extension member by gravity when pressurization is released in the state in which the inside of the hollow spiral extension member is filled with the ultrasonic transmission medium by the pressurization of the pressure adjuster.

According to the example related to the present disclosure, the system may further include: an extension tube detachably coupled to an upper end of the hollow spiral extension member and formed to extend upward so that the inside of the hollow spiral extension member is fully filled with the ultrasonic transmission medium and a position of a pressure anti-node is stably controlled in an entire inner region of the hollow spiral extension member.

According to the example related to the present disclosure, the pressure adjuster may be configured to adjust a filling level of the ultrasonic transmission medium in the extension tube by adjusting pressure.

According to the example related to the present disclosure, the pressure adjuster may be configured to adjust the filling level of the ultrasonic transmission medium so that the ultrasonic cavitation peening is performed on the inner surface of the hollow spiral extension member in a state in which a level surface of the ultrasonic transmission medium in the extension tube exceeds an end surface of the extension tube and the ultrasonic transmission medium leaks to the outside.

According to the example related to the present disclosure, the system for peening an inner surface of a hollow spiral extension member may further include: a cooler installed in the medium tank and configured to maintain a temperature of the ultrasonic transmission medium accommodated in the medium tank to a preset temperature or lower to prevent vapor of the ultrasonic transmission medium from being introduced into a cavity that is formed during the ultrasonic cavitation peening.

According to the example related to the present disclosure, an ultrasonic probe of the ultrasonic generator, which generates ultrasonic waves, may be configured to penetrate the connection pipe so that the ultrasonic probe is at least partially disposed in the connection pipe, a portion of the connection pipe penetrated by the ultrasonic probe may be installed with: a sealing member for sealing; and a coating member made of a metallic or nonmetallic material and configured to be coated onto a surface of one end of the ultrasonic probe to protect the surface of one end of the ultrasonic probe, and the sealing member may be disposed at a position of a pressure anti-node of the ultrasonic probe at which a vibrational displacement becomes 0 when ultrasonic waves are generated.

According to the example related to the present disclosure, the hollow spiral extension member may be a hollow coil spring, and the system may further include a pressing jig configured to press an upper side of the hollow coil spring downward in a state in which the pressing jig supports a lower side of the hollow coil spring to maintain a state in which the hollow coil spring is compressed during the ultrasonic cavitation peening process.

According to the example related to the present disclosure, the system may further include: an extension pipe connected between one end and the other end and provided with a plurality of openings, in which ultrasonic probes are respectively mounted in the plurality of openings.

According to the example related to the present disclosure, the extension pipe may include a branch portion configured to divide a communication portion, which is provided with a single opening communicating with the connection pipe, into the plurality of openings, and the branch portion may be positioned at an equal distance from respectively each of the plurality of openings so that the ultrasonic waves respectively entering the plurality of openings overlap one another in the branch portion.

According to the example related to the present disclosure, the system may further include: an extension pipe connected between one end and the other end, in which the extension pipe includes: a communication portion configured to communicate with the connection pipe; an ultrasonic probe mounting portion configured to form a space in which an ultrasonic probe configured to generate ultrasonic waves toward the communication portion is mounted; and a bubble discharge portion extending in a shape branching between the communication portion and the ultrasonic probe mounting portion so that bubbles, which are generated during peening by the ultrasonic probe, are discharged while being raised by buoyancy.

A method of peening a hollow spiral extension member using the system for peening an inner surface according to another embodiment of the present disclosure includes: connecting a lower end of the hollow spiral extension member to the connection pipe; filling the inside of the hollow spiral extension member with the ultrasonic transmission medium by controlling the pressure adjuster; performing the ultrasonic cavitation peening on the inner surface of the hollow spiral extension member by operating the ultrasonic generator; recovering the ultrasonic transmission medium, with which the inside of the hollow spiral extension member is filled, to the medium tank by controlling the pressure adjuster; and separating the hollow spiral extension member from the connection pipe.

According to the example related to the present disclosure, the performing of the ultrasonic cavitation peening may include changing a position of a pressure anti-node, which is an ultrasonic cavitation peening point, by controlling the pressure adjuster.

The effects of the present disclosure obtained by the above-described technical solution are as follows.

First, the system for peening an inner surface of a hollow spiral extension member includes the medium tank configured to accommodate the ultrasonic transmission medium, the connection pipe respectively connected to the hollow spiral extension member and the medium tank and configured to form the movement flow path for the ultrasonic transmission medium, the pressure adjuster configured to control the flow rate of the ultrasonic transmission medium by adjusting the pressure in the medium tank, and the ultrasonic generator configured to generate ultrasonic waves toward the inside of the hollow spiral extension member in the connection pipe so that the ultrasonic cavitation peening is performed on the inner surface of the hollow spiral extension member by generating the ultrasonic waves in the state in which the inside of the hollow spiral extension member is filled with the medium.

According to the configuration of the system for peening an inner surface of a hollow spiral extension member described above, the system for peening an inner surface of a hollow spiral extension member may be provided in which the pressure adjuster may be used to easily control the filling level of the ultrasonic transmission medium to be supplied into the hollow spiral extension member, and the ultrasonic transmission medium may be more stably supplied and recovered, thereby improving the efficiency of the peening operation.

Second, the system for peening an inner surface of a hollow spiral extension member may include the connection pipe having the first side portion having the single opening communicating with the hollow spiral extension member and the medium tank, the second side portion, and the third side portion provided branching between the first side portion and the second side portion and having the plurality of openings. In the state in which the excitation displacement of the ultrasonic probe is not excessively increased, the plurality of ultrasonic probes are controlled in the same phase, such that the ultrasonic waves may propagate by the same distance without a loss of ultrasonic wave strength in the connection pipe and then meet together while overlapping one another in the same phase in the branch portion, and the ultrasonic waves may reach the hollow spiral extension member in the state in which the excitation displacement is increased in the branch portion. Therefore, it is possible to improve the cavitation efficiency by increasing the acoustic field strength in the target region while preventing unnecessary cavitation from being formed around the probe.

Third, the system for peening an inner surface of a hollow spiral extension member may be provided in the shape in which the bubble discharge portion branches between the first side portion of the connection pipe and the third side portion extending from the second side portion, such that bubbles, which are generated during the ultrasonic peening process, may be discharged to the outside while being naturally raised by buoyancy. Therefore, it is possible to effectively prevent scattering and blocking of ultrasonic waves caused by macro-bubbles accumulated on the peening target and the waveguide and to stably ensure the peening efficiency by maintaining constant effective acoustic field strength in the peening target.

### BRIEF DESCRIPTION OF THE DRAWINGS

FIG. 1 is a conceptual view illustrating a configuration of a system for peening an inner surface of a hollow spiral extension member according to an embodiment of the present disclosure.
FIG. 2 is a conceptual view illustrating a state in which the hollow spiral extension member illustrated in FIG. 1 is connected to a connection pipe.
FIG. 3 is a conceptual view illustrating a state in which the inside of the hollow spiral extension member is filled with an ultrasonic transmission medium by controlling a pressure adjuster illustrated in FIG. 1.
FIG. 4 is a conceptual view illustrating an aspect in which ultrasonic cavitation peening is performed by operating an ultrasonic generator illustrated in FIG. 1.
FIG. 5 is a conceptual view illustrating an aspect in which the ultrasonic transmission medium, with which the inside of the hollow spiral extension member is filled, is recovered to a medium tank by controlling the pressure adjuster illustrated in FIG. 1.
FIG. 6 is a conceptual view illustrating an aspect in which the hollow spiral extension member illustrated in FIG. 1 is separated from the connection pipe.
FIG. 7 is a conceptual view illustrating another example of the system for peening an inner surface illustrated in FIG. 1.
FIG. 8 is a conceptual view of a system for peening an inner surface provided with a plurality of ultrasonic probes according to another embodiment of the present disclosure.
FIG. 9 is a conceptual view illustrating another example of the system for peening an inner surface provided with the plurality of ultrasonic probes illustrated in FIG. 8.
FIG. 10 is a conceptual view illustrating the system for peening an inner surface of a hollow spiral extension member provided with a bubble discharge portion according to the embodiment of the present disclosure.
FIG. 11 is a conceptual view illustrating another example of the system for peening an inner surface provided with the bubble discharge portion illustrated in FIG. 10.
FIG. 12 is a conceptual view of the system for peening an inner surface in which the bubble discharge portion illustrated in FIG. 10 is provided as a plurality of bubble discharge portions.
FIG. 13 is a flowchart illustrating a method of peening a hollow spiral extension member using the system for peening an inner surface according to another embodiment of the present disclosure.

### DETAILED DESCRIPTION OF THE INVENTION

Hereinafter, a system 100 for peening an inner surface of a hollow spiral extension member and a method of peening a hollow spiral extension member E using the same related to the present disclosure will be described more specifically with reference to the drawings.

In the present specification, the same or similar components, even in different embodiments, will be denoted by the same or similar reference numerals, and repetitive descriptions thereof will be omitted.

Singular expressions include plural expressions unless clearly described as different meanings in the context.

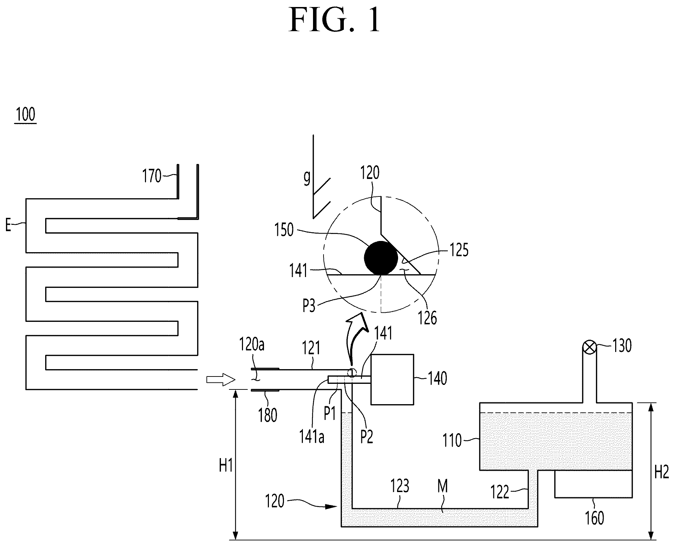

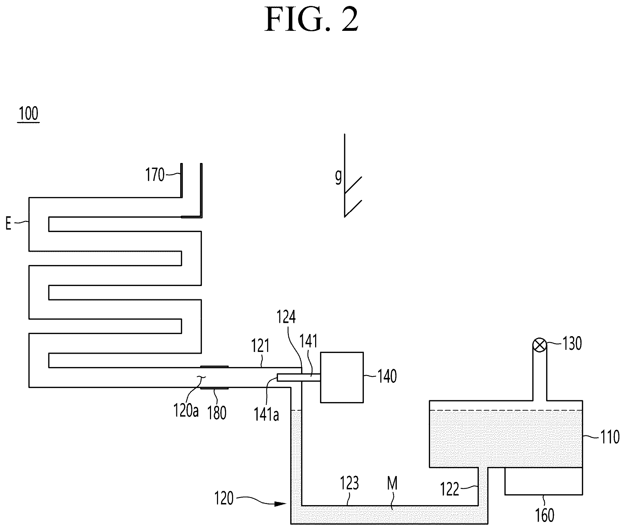

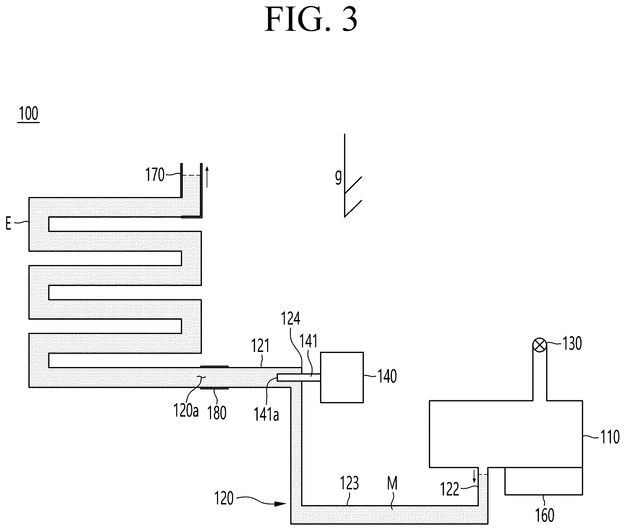

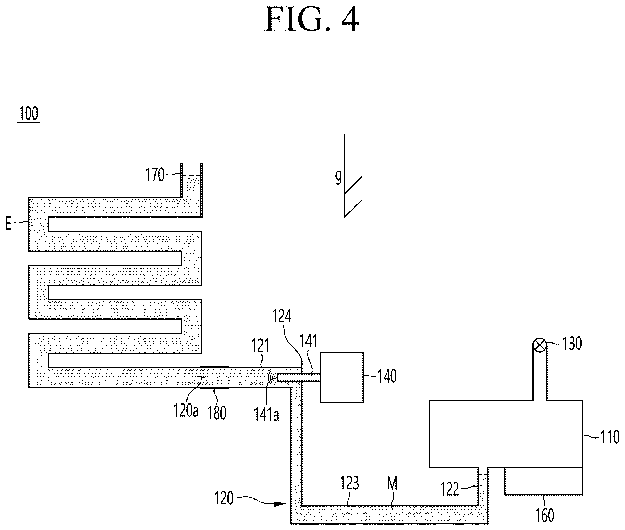

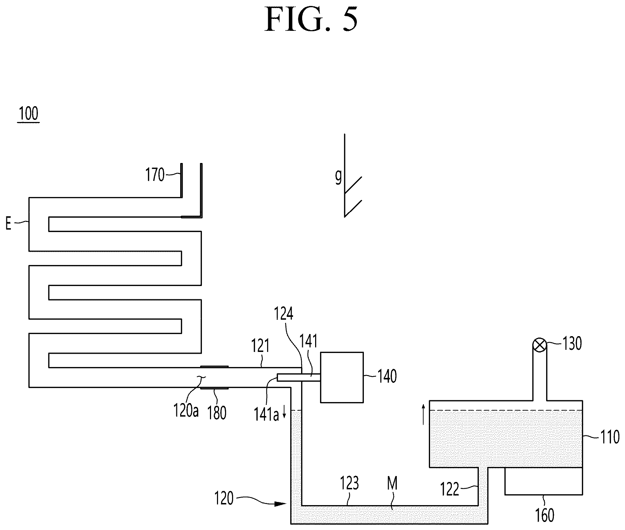

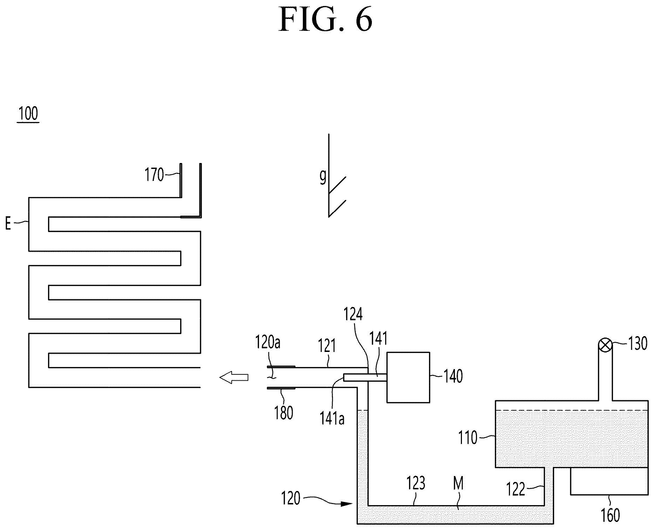

FIG. 1 is a conceptual view illustrating a configuration of the system 100 for peening an inner surface of a hollow spiral extension member according to the embodiment of the present disclosure. FIG. 2 is a conceptual view illustrating a state in which the hollow spiral extension member E illustrated in FIG. 1 is connected to a connection pipe 120. FIG. 3 is a conceptual view illustrating a state in which the inside of the hollow spiral extension member E is filled with an ultrasonic transmission medium M by controlling a pressure adjuster 130 illustrated in FIG. 1. FIG. 4 is a conceptual view illustrating an aspect in which ultrasonic cavitation peening is performed by operating an ultrasonic generator 140 illustrated in FIG. 1. FIG. 5 is a conceptual view illustrating an aspect in which the ultrasonic transmission medium M, with which the inside of the hollow spiral extension member E is filled, is recovered to a medium tank 110 by controlling the pressure adjuster 130 illustrated in FIG. 1. FIG. 6 is a conceptual view illustrating an aspect in which the hollow spiral extension member E illustrated in FIG. 1 is separated from the connection pipe 120.

With reference to FIGS. 1 to 6, the system 100 for peening an inner surface of a hollow spiral extension member may be configured to perform an operation of peening an inner surface of the hollow spiral extension member E. The peening refers to a surface treatment method of improving residual stress and fatigue strength by imparting plastic deformation by applying impact to a surface layer of a material. The system 100 for peening an inner surface of a hollow spiral extension member is configured to perform a peening method using ultrasonic cavitation. The ultrasonic cavitation peening refers to a peening method of peening the inner surface of the hollow spiral extension member E by means of a process of generating an ultrasonic acoustic field in a hollow portion of the hollow spiral extension member E by the ultrasonic generator 140 disposed to communicate with the inside of the hollow spiral extension member E and generating and exploding an ultrasonic cavity, i.e., a pore by the acoustic field.

The cavity, which is formed in the ultrasonic transmission medium M by ultrasonic waves, comes into contact with the inner surface of the hollow spiral extension member E and instantaneously generates pressure of several hundreds of atmospheres or higher and high heat within a short period of time of about several tens of milliseconds, thereby peening the inner surface of the hollow spiral extension member E while imparting residual compressive stress to a surface of the inner surface of the hollow spiral extension member E that is a treated object.

Meanwhile, the hollow spiral extension member E may be formed to have an empty shape having a spiral external appearance. At least any one of two opposite ends of the hollow spiral extension member E may be formed to be open.

The system 100 for peening an inner surface of a hollow spiral extension member includes the medium tank 110, the connection pipe 120, the pressure adjuster 130, and the ultrasonic generator 140.

The medium tank 110 is formed to accommodate the ultrasonic transmission medium M. The ultrasonic transmission medium M refers to a material that transmits ultrasonic waves, which are generated by the ultrasonic generator 140 to be described below, into the hollow spiral extension member E. For example, the ultrasonic transmission medium M may be made of water, gel, various types of oil, or the like. In addition, because dissolved gas in a solution may degrade strength of cavitation, the ultrasonic transmission medium M may be formed in a degassed form from which all dissolved gases are removed.

The connection pipe 120 is respectively connected to the hollow spiral extension member E and the medium tank 110 and forms a movement flow path for the ultrasonic transmission medium M into the hollow spiral extension member E from the medium tank 110.

The pressure adjuster 130 is connected to the medium tank 110 and configured to control a filling level of the ultrasonic transmission medium M by adjusting pressure in the medium tank 110. The pressure adjuster 130 may be configured to adjust the pressure in the medium tank 110 to positive pressure or negative pressure. For example, when the pressure in the medium tank 110 becomes positive pressure, the ultrasonic transmission medium M may move from the medium tank 110 to the hollow spiral extension member E. On the contrary, when the pressure in the medium tank 110 becomes negative pressure, the ultrasonic transmission medium M may move from the hollow spiral extension member E to the medium tank 110.

In addition, FIGS. 1 to 7 illustrate that the pressure adjuster 130 has a shape connected to an upper side of the medium tank 110. However, the pressure adjuster 130 may be connected to another portion other than the upper side of the medium tank 110. For example, the pressure adjuster 130 may be connected to a lower side of the medium tank 110. In this case, unlike the case in which the pressure adjuster 130 is disposed at the upper side of the medium tank 110, at least a part of the pressure adjuster 130 may be immersed in the ultrasonic transmission medium M accommodated in the medium tank 110.

The ultrasonic generator 140 may be installed on the connection pipe 120. The ultrasonic generator 140 may be provided with an ultrasonic probe 141 configured to generate ultrasonic waves. The ultrasonic probe 141 may be made of titanium or aluminum. A probe tip 141a may be provided at one end of the ultrasonic probe 141. The ultrasonic probe tip 141a may be formed at and coupled to one end of the ultrasonic probe 141. In contrast, the ultrasonic probe tip 141a may be manufactured integrally with the ultrasonic probe 141 and refer to one end of the ultrasonic probe 141. The ultrasonic probe 141 of the ultrasonic generator 140 may be disposed to penetrate the connection pipe 120 from the outside to the inside of the connection pipe 120. The connection pipe 120 may be provided with an ultrasonic probe mounting portion 124 on which the ultrasonic probe 141 may be mounted. As illustrated in FIG. 4, the ultrasonic generator 140 may generate ultrasonic waves from the inside of the connection pipe toward the inside of the hollow spiral extension member E so that the ultrasonic cavitation peening is performed on the inner surface of the hollow spiral extension member E in the state in which the inside of the hollow spiral extension member E is filled with the ultrasonic transmission medium M. In this case, the probe tip 141a may be in a state in which the probe tip 141a is immersed in the medium.

In addition, the system 100 for peening an inner surface of a hollow spiral extension member may further include a coating member (not illustrated). The ultrasonic generator 140 may generate ultrasonic waves, and the coating member may be made of a metal or non-metallic material and to be coated to one end of the ultrasonic probe 141 in order to protect a surface of one end of the ultrasonic probe 141, on which ultrasonic cavitation is generated by the generated ultrasonic waves, from the ultrasonic cavitation. For example, the coating member may be made of a metallic material, such as tungsten, or a non-metallic material such as diamond. Therefore, it is possible to more stably provide the ultrasonic generation function by improving the durability of the ultrasonic probe 141 and extend the service life of the ultrasonic probe 141.

In a peening step of generating a cavity in the ultrasonic transmission medium M by ultrasonic waves, the ultrasonic probe 141 of the ultrasonic generator 140 may be disposed to be at least partially immersed in the ultrasonic transmission medium M and configured to transmit ultrasonic waves through the ultrasonic transmission medium M.

The ultrasonic probe 141 of the ultrasonic generator 140 may be configured to generate ultrasonic waves in the ultrasonic transmission medium M by exciting the ultrasonic transmission medium M, which is in contact with the probe tip 141a of the ultrasonic probe 141, while resonating in an axial direction of the ultrasonic probe 141. However, in addition to the excitation method using resonance, the ultrasonic probe 141 may be configured to generate ultrasonic waves in the ultrasonic transmission medium M by exciting the ultrasonic transmission medium M in a non-resonant state.

Meanwhile, in case that the ultrasonic probe 141 resonates in the axial direction, a standing wave may be formed in the axial direction. Further, pressure nodes, at which pressure becomes 0, may be formed in the axial direction on the ultrasonic probe 141, and pressure anti-nodes P1, P2, and P3, at which vibrational displacement becomes 0, may be formed in the axial direction on the ultrasonic probe 141. More specifically, the ultrasonic wave generated by the ultrasonic probe 141 may be formed as the standing wave by being totally reflected by a boundary surface of air that is in contact with the ultrasonic transmission medium M with which the hollow spiral extension member E is filled. When the standing wave is formed, high pressure is generated at the pressure anti-nodes P1, P2, and P3, and cavitation is concentratedly generated. It is possible to adjust the boundary surface of air, by which the ultrasonic wave is totally reflected, to prevent peening from being performed only at specific positions at which the pressure anti-nodes P1, P2, and P3 are formed. Therefore, it is possible to move a peening region, in which the pressure anti-nodes P1, P2, and P3 are formed, by adjusting the filling level of the ultrasonic transmission medium M, thereby performing uniform peening on the entire region of the inner surface.

According to another example of the present disclosure, the ultrasonic probe 141 may form a traveling wave together with the standing wave while resonating in the axial direction. In case that the traveling wave is more predominantly generated, the pressure anti-nodes P1, P2, and P3 are not formed, and thus it is possible to implement uniform peening on the inner surface in the entire region even without adjusting the filling level of the ultrasonic transmission medium.

In the following description, a case in which the pressure anti-nodes P1, P2, and P3 are formed in accordance with the standing wave will be described in detail.

In case that the ultrasonic probe 141 is excited at a resonant frequency in the axial direction of the ultrasonic probe 141, no vibrational displacement occurs in the vicinity of a point of (2n-1) (λ/4) from one end based on the probe tip 141a of the ultrasonic probe 141. That is, the pressure anti-nodes P1, P2, and P3 may be formed in the vicinity of the point of (2n-1) (λ/4) from the probe tip 141a. In this case, n may be a natural number, and λ may be an axial wavelength of the ultrasonic wave in the ultrasonic probe 141 generated by the resonant frequency that allows the ultrasonic probe 141 to resonate in the axial direction. Therefore, a first point P1 may be a point of λ/4 from the probe tip 141a when n=1, a second point P2 may be a point of 3λ/4 from the probe tip 141a when n=2, and a third point P3 may be a point of 5λ/4 from the probe tip 141a when n=3.

Theoretically, the pressure anti-nodes P1, P2, and P3 of the ultrasonic probe 141 are formed at the point of (2n-1) (λ/4) from the probe tip 141a. However, because of various elements, such as a change in vibration, caused by other components coupled to the ultrasonic probe 141 when the ultrasonic probe 141 is implemented as a device, the pressure anti-nodes P1, P2, and P3 of the ultrasonic probe 141 may be formed in the vicinity of the point of (2n-1) (λ/4) without being formed at the point of accurate (2n-1) (λ/4) from the probe tip 141a.

In the following description, for convenience of explanation, the pressure anti-nodes P1, P2, and P3 of the ultrasonic probe 141 will be described as being formed at the point of (2n-1) (λ/4) from the probe tip 141a.

The pressure anti-nodes P1, P2, and P3 may be formed at the first point P1, the second point P2, the third point P3, and the like on the ultrasonic probe 141. In other words, the vibrational displacement of the ultrasonic probe 141, i.e., shape deformation does not occur at the first point P1, the second point P2, the third point P3, and the like.

Therefore, as illustrated in FIG. 1, when the ultrasonic probe 141 vibrates, the pressure node, at which the highest amplitude occurs, is formed on the probe tip 141a. Further, the first point P1, the second point P2, and the third point P3 may become the pressure anti-nodes P1, P2, and P3 at which the amplitude becomes 0, i.e., the vibrational displacement is minimized, and the pressure is maximized.

The probe tip 141a may become the pressure node in order for the ultrasonic probe 141 to effectively generate ultrasonic waves in the ultrasonic transmission medium M, in other words, in order to allow the ultrasonic probe 141 to resonate during excitation. That is, a length of the ultrasonic probe 141 may be set to allow the ultrasonic probe 141 to be resonated by an excitation frequency. When the ultrasonic transmission medium M is excited as the ultrasonic probe 141, which is resonating, comes into contact with the ultrasonic transmission medium M, the ultrasonic wave propagates in the ultrasonic transmission medium M. In this case, when the pressure node of the ultrasonic probe 141, which has the largest displacement, becomes an excitation surface of the ultrasonic transmission medium M, the ultrasonic transmission medium M is maximally excited, and energy, which propagates, is also maximized.

In addition, the pressure anti-node, which is formed in the ultrasonic transmission medium M with which the inside of the hollow spiral extension member E is filled, occurs periodically without occurring in all sections of the hollow spiral extension member E, and the peening is not performed at a point that does not correspond to the pressure anti-nodes P1, P2, and P3. The system 100 for peening an inner surface of a hollow spiral extension member of the present disclosure may move the positions of the pressure anti-nodes P1, P2, and P3 by moving the filling level, i.e., the boundary surface between the ultrasonic transmission medium M and the air by controlling the pressure adjuster 130. The system 100 for peening an inner surface of a hollow spiral extension member may perform the peening operation on the entire inner surface of the hollow spiral extension member E while moving the positions of the pressure anti-nodes P1, P2, and P3 by means of a method of controlling the pressure adjuster 130.

Meanwhile, a connecting tube 180 may be installed at one end 121 of the connection pipe 120 and detachably connected to a lower end of the hollow spiral extension member E. An opening 120a may be formed in the connecting tube 180 and connected to the inside of the hollow spiral extension member E. Therefore, the hollow spiral extension member E may be configured to be filled with the ultrasonic transmission medium M from a bottom portion to an upper portion of the hollow spiral extension member E. The opening 120a may be disposed at a height H1 corresponding to the lower end of the hollow spiral extension member E.

Further, the connecting tube 180 may be formed to surround one end of the hollow spiral extension member E. A portion where the hollow spiral extension member E and the connection pipe 120 are connected may be sealed by the connecting tube 180, thereby preventing a leak of the ultrasonic transmission medium M.

According to the configuration of the system 100 for peening an inner surface of a hollow spiral extension member described above, the ultrasonic transmission medium M may be stably supplied so that the inside of the hollow spiral extension member E is filled with the ultrasonic transmission medium M from the bottom portion to the upper portion of the hollow spiral extension member E. In the state in which the inside of the hollow spiral extension member E is filled with the ultrasonic transmission medium M, the peening region may be controlled by adjusting the filling level of the ultrasonic transmission medium M by using the pressure adjuster 130. Further, after the ultrasonic cavitation peening on the inner surface of the hollow spiral extension member E is completed, the ultrasonic transmission medium M may be stably recovered to the medium tank 110 through the connection pipe 120.

Meanwhile, a height H2 of an upper end of the medium tank 110 may be positioned to be lower than the height H1 at which the connecting tube 180 is formed. Therefore, when the pressurization is released in the state in which the inside of the hollow spiral extension member E is filled with the ultrasonic transmission medium M by the pressurization of the pressure adjuster 130, the ultrasonic transmission medium M may be completely discharged from the hollow spiral extension member E by gravity.

According to the above-mentioned structure, the ultrasonic transmission medium M, with which the inside of the hollow spiral extension member E is filled, may be recovered into the medium tank 110 by gravity when the medium tank 110 and the connection pipe 120 are in an atmospheric pressure state. In this case, the height H1 of the opening 120a formed in the connecting tube 180 is positioned to be higher than the height H2 of the upper end of the medium tank 110, such that the ultrasonic transmission medium M may form a level lower than the opening 120a. Therefore, it is possible to prevent the ultrasonic transmission medium M from overflowing to the outside through the connecting tube 180.

Meanwhile, a method of forming atmospheric pressure in the medium tank 110 and the connection pipe 120 by stopping the operation of the pressure adjuster 130 may be used to recover the ultrasonic transmission medium M with which the inside of the hollow spiral extension member E is filled. However, the inside of the medium tank 110 and the inside of the connection pipe 120 may not be maintained at atmospheric pressure by the operation of the pressure adjuster 130 during the process of recovering the ultrasonic transmission medium M. That is, negative pressure may be formed in the medium tank 110 to recover the ultrasonic transmission medium M into the medium tank 110. However, the method of recovering the ultrasonic transmission medium M by forming atmospheric pressure in the medium tank 110 and the connection pipe 120 does not need to operate the pressure adjuster 130, thereby obtaining advantages of reducing the amount of energy consumed by the operation of the pressure adjuster 130 and simplifying the peening operation.

Meanwhile, the other end 122 of the connection pipe 120 may be connected to a bottom portion of the medium tank 110. Therefore, the ultrasonic transmission medium M accommodated in the medium tank 110 may be smoothly discharged to the outside of the medium tank 110 from a bottom surface in the medium tank 110 through the other end 122 of the connection pipe 120. In the drawings of the present disclosure, the other end 122 of the connection pipe 120 is illustrated as extending downward in a vertical direction. However, the other end 122 of the connection pipe 120 may be formed to extend downward in a shape inclined at a predetermined angle instead of extending in the vertical direction.

The connection pipe 120 may be provided with an extension portion 123 having two opposite ends respectively connected to the other end 122 and one end 121 of the connection pipe 120. As illustrated in the drawings of the present disclosure, the other end 122 of the connection pipe 120 and the extension portion 123 may be formed to collectively have a ' 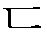 ' shape. In addition, although not illustrated in the drawings of the present disclosure, the other end 122 of the connection pipe 120 and the extension portion 123 may be formed in a 'U' shape instead of a ' 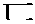 ' shape.

In addition, the ultrasonic probe 141 of the ultrasonic generator 140 may be disposed to be directed toward the opening 120a of the connecting tube 180. According to the structure of the ultrasonic probe 141 described above, there is no structure that interferes with the propagation of the ultrasonic waves in the connection pipe 120 until the generated ultrasonic waves pass through the connecting tube 180 and move into the hollow spiral extension member E, such that the interference occurring in the ultrasonic transmission section may be reduced, thereby minimizing a loss of energy. Therefore, it is possible to further improve the quality of the ultrasonic cavitation peening.

In addition, the ultrasonic probe 141 may penetrate the connection pipe 120 so that at least a part of ultrasonic probe 141 may be disposed in the connection pipe 120. In this case, the system 100 for peening an inner surface of a hollow spiral extension member may further include a sealing member 150.

The sealing member 150 may be disposed at a position on a length portion of the ultrasonic probe 141 that corresponds to the pressure anti-nodes P1, P2, and P3 at which the vibrational displacement becomes 0 when ultrasonic waves are generated. For example, the sealing member 150 may be formed at the third point P3 that is one of the pressure anti-nodes P1, P2, and P3 illustrated in FIG. 1. Therefore, because the sealing member 150 and a portion sealed by the sealing member 150 are not vibrated, an effect of sealing a portion of a tapered portion 125 and an outer surface of the ultrasonic probe 141 may be more stably implemented.

In addition, the sealing member 150 may be installed at a pressure anti-node in the vicinity of one end, i.e., the bottom surface of the ultrasonic probe 141. Therefore, a contact area may be minimized, and a loss of energy caused by contact friction may be minimized.

On the contrary, the sealing member 150 may be installed on a portion penetrated by the ultrasonic generator 140 instead of the ultrasonic probe 141 in the state in which the ultrasonic generator 140 is installed to penetrate the connection pipe 120. However, as illustrated in the drawings of the present disclosure, in case that the sealing member 150 is installed on the ultrasonic probe 141 instead of the ultrasonic generator 140, the contact area with the ultrasonic transmission medium M may be reduced and a loss of energy caused by friction with the ultrasonic transmission medium M may be reduced in comparison with the case in which the sealing member 150 is installed on the ultrasonic generator 140. That is, the structure in which the sealing member 150 is installed on the ultrasonic probe 141 may minimize a loss of energy in comparison with the case in which the sealing member 150 is installed on a main body of the ultrasonic generator 140.

In addition, a portion of the connection pipe 120 penetrated by the ultrasonic probe 141 may be provided with the tapered portion 125 formed to be inclined outward from the inside. In this case, the sealing member 150 may be disposed in a recess portion 126 formed between the tapered portion 125 and an outer surface of the ultrasonic probe 141 and seal the portion of the connection pipe 120 penetrated by the ultrasonic probe 141. According to the structure of the sealing member 150, the sealing member 150 is more tightly attached to the tapered portion 125 while being pushed outward, i.e., rightward based on FIG. 1 as the pressure in the connection pipe 120 is increased by the pressure adjuster 130. As a result, it is possible to improve sealability for the portion of the connection pipe 120 penetrated by the ultrasonic probe 141. The sealing member 150 may be made of an elastically deformable material.

Meanwhile, the system 100 for peening an inner surface of a hollow spiral extension member may further include a cooler 160.

In order to prevent vapor of the ultrasonic transmission medium M from being introduced into the cavity, the cooler 160 may be installed in the medium tank 110 and configured to maintain the temperature of the ultrasonic transmission medium M accommodated in the medium tank 110 to a preset magnitude or lower.

The cavity generated by ultrasonic waves generates a shock wave while bursting, and the shock wave performs peening on a surface. Therefore, it is advantageous for the shock wave to be stronger to enhance the peening effect. However, when the temperature of the ultrasonic transmission medium M is high, a large amount of water vapor is accommodated in the cavity. In this state, when the cavity bursts, the water vapor existing in the cavity absorbs impact, thereby reducing the amount of impact. The system 100 for peening an inner surface of the present disclosure may more stably provide the peening effect by decreasing the temperature of the ultrasonic transmission medium M by means of the cooler 160.

Meanwhile, the system 100 for peening an inner surface of a hollow spiral extension member may further include an extension tube 170.

The extension tube 170 may be detachably coupled to an upper end of the hollow spiral extension member E and formed to extend upward so that the inside of the hollow spiral extension member E may be fully filled with the ultrasonic transmission medium M.

The level of the ultrasonic transmission medium M formed in a horizontal direction may be more stably controlled by the structure of the extension tube 170. The level of the ultrasonic transmission medium M may be measured by means of an electronic level sensor or by human vision. The extension tube 170 may be made of a light transmissive material to observe the level of the ultrasonic transmission medium M.

The extension tube 170 may perform a function of measuring the level of the ultrasonic transmission medium M, and a function of blocking the other end of the hollow spiral extension member E and guiding the ultrasonic transmission medium M so that even the other end of the hollow spiral extension member E is fully filled with the ultrasonic transmission medium M.

In addition, the extension tube 170 may be formed in a direction perpendicular to a ground surface so that an angle defined between an inner surface of the extension tube 170 and a level surface of the ultrasonic transmission medium M is made to be at a right angle. According to the structure of the extension tube 170, the level surface, which forms the boundary surface with outside air, and the inner surface of the extension tube 170 form a right angle, such that the standing wave is formed in a one-dimensional manner in the hollow spiral extension member E, and the pressure anti-nodes may be formed at equal intervals in the entire region including the upper end of the hollow spiral extension member E. As a result, it is possible to stably control the peening position corresponding to the position of the pressure anti-node. On the contrary, in case that the inner surface of the upper end of the hollow spiral extension member E does not create a right angle together with the level surface when the extension tube 170 is not used or in case that the extension tube 170 is not formed in the direction perpendicular to the ground surface even when the extension tube 170 is used, i.e., in case that the level surface and the inner surface of the extension tube 170 do not form a right angle, some of the pressure anti-nodes, which are formed at the end of the hollow spiral extension member E adjacent to the extension tube 170, may be formed irregularly and may not be formed at equal intervals.

In addition, the pressure adjuster 130 may be configured to adjust the filling level of the ultrasonic transmission medium M in the extension tube 170 by adjusting pressure. The pressure adjuster 130 may adjust the filling level by adjusting pressure so that the level surface of the ultrasonic transmission medium M in the extension tube 170 exceeds an end surface of the extension tube 170 and the ultrasonic transmission medium M leaks to the outside. It is possible to implement uniform peening by adjusting the positions of the pressure anti-nodes P1, P2, and P3 by adjusting the leveling of the ultrasonic transmission medium M in the extension tube 170 in accordance with the pressure adjustment by the pressure adjuster 130.

Meanwhile, the system 100 for peening an inner surface of a hollow spiral extension member may include a medium supply part, the connection pipe 120, the ultrasonic generator 140, and the sealing member 150.

The medium supply part may be configured to supply and recover the ultrasonic transmission medium M.

The connection pipe 120 may be respectively connected to the hollow spiral extension member E and the medium supply part and form a movement flow path for the ultrasonic transmission medium M from the medium supply part into the hollow spiral extension member E. In addition, the connection pipe 120 may be connected to the lower end of the hollow spiral extension member E.

The ultrasonic generator 140 may be installed so that the ultrasonic probe 141, which generates ultrasonic waves, penetrates the connection pipe 120. Further, the ultrasonic generator 140 is configured to generate ultrasonic waves toward the inside of the hollow spiral extension member E in the connection pipe 120 so that the ultrasonic cavitation peening is performed on the inner surface of the hollow spiral extension member E in the state in which the inside of the hollow spiral extension member E is filled with the ultrasonic transmission medium M.

The sealing member 150 may be installed on the portion of the connection pipe 120 penetrated by the ultrasonic probe 141. In this case, the sealing member 150 may be disposed at the position of the pressure anti-node of the ultrasonic probe 141 at which the vibrational displacement becomes 0 when ultrasonic waves are generated by the ultrasonic probe 141.

On the contrary, although not illustrated in the drawings of the present disclosure, the sealing member 150 may be installed on the portion penetrated by the ultrasonic generator 140 instead of the ultrasonic probe 141 in the state in which the ultrasonic generator 140 is installed to penetrate the connection pipe 120. However, in case that the sealing member 150 is installed on the ultrasonic probe 141 instead of the ultrasonic generator 140, the contact area with the ultrasonic transmission medium M may be reduced and a loss of energy caused by friction with the ultrasonic transmission medium M may be reduced in comparison with the case in which the sealing member 150 is installed on the ultrasonic generator 140. That is, the structure in which the sealing member 150 is installed on the ultrasonic probe 141 may minimize a loss of energy in comparison with the case in which the sealing member 150 is installed on a main body of the ultrasonic generator 140.

In addition, the system 100 for peening an inner surface of a hollow spiral extension member may further include an extension tube 170.

The extension tube 170 may be detachably coupled to the upper end of the hollow spiral extension member E so that the inside of the hollow spiral extension member E may be fully filled with the ultrasonic transmission medium.

In addition, the medium supply part may be configured to adjust the filling level of the ultrasonic transmission medium in the extension tube. For example, in order to adjust a flow of the ultrasonic transmission medium, the medium supply part may be configured to adjust pressure formed in a movement route for the ultrasonic transmission medium M to positive pressure or negative pressure.

According to the configuration of the system 100 for peening an inner surface of a hollow spiral extension member described above, the pressure adjuster 130 may be used to easily control the level of the ultrasonic transmission medium M to be supplied into the hollow spiral extension member E, and the ultrasonic transmission medium M may be more stably supplied and recovered, thereby improving the efficiency of the peening operation.

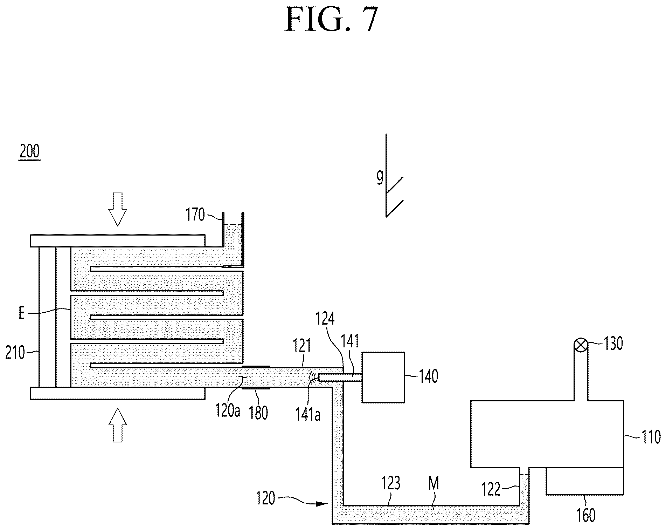

Hereinafter, the system 100 for peening an inner surface of a hollow spiral extension member according to another example of the present disclosure will be described with reference to FIG. 7.

FIG. 7 is a conceptual view illustrating another example of the system 100 for peening an inner surface illustrated in FIG. 1.

With reference to FIG. 7, the hollow spiral extension member E may be a hollow coil spring. The hollow coil spring has a characteristic in that the hollow coil spring is compressed, when a physical force with a preset magnitude or higher is applied, and restored to an original shape by elasticity when the applied force is eliminated.

In order to keep the hollow coil spring compressed during the ultrasonic cavitation peening process, a pressing jig 210 may be configured to press an upper side of the hollow coil spring downward in a state in which the pressing jig 210 supports a lower side of the hollow coil spring. For example, in order to induce plastic deformation of the hollow coil spring, the pressing jig 210 is configured to press the hollow coil spring in an upward/downward direction to a yield stress of the hollow coil spring.

According to the configuration of the pressing jig 210, the ultrasonic cavitation peening is performed in the state in which stress is applied in advance to the hollow coil spring and a stress value is given to be close to yield stress, thereby further increasing the peening effect on the inner surface of the hollow coil spring.

For reference, when yield stress of a material is high, the peening effect is not sufficiently exhibited because the material remains within an elastic region even though the peening operation is performed. In the case of the present disclosure, the pressing jig 210 compresses the hollow coil spring and raises the stress of the hollow coil spring to the yield stress, such that a stress magnitude immediately before the hollow coil spring is plastically deformed may occur, thereby significantly increasing the peening effect.

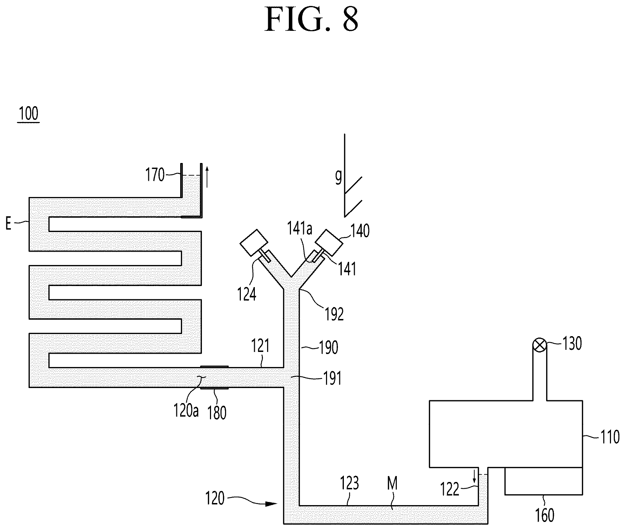

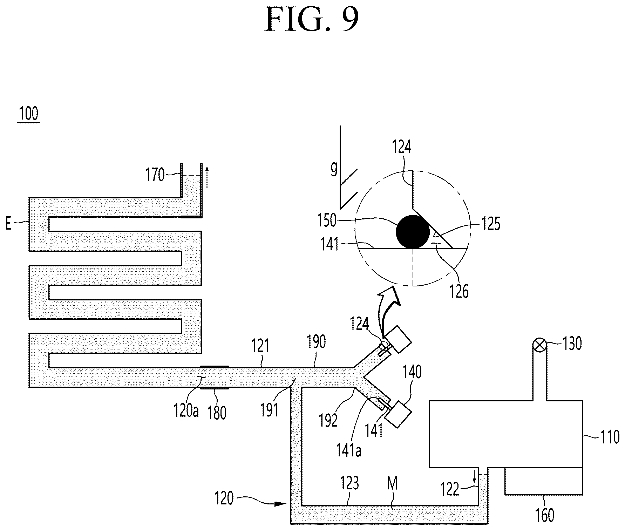

FIG. 8 is a conceptual view of the system 100 for peening an inner surface provided with a plurality of ultrasonic probes 141 according to another embodiment of the present disclosure, and FIG. 9 is a conceptual view illustrating another example of the system 100 for peening an inner surface provided with the plurality of ultrasonic probes 141 illustrated in FIG. 8.

With reference to FIGS. 8 and 9, the system 100 for peening the inner surface of the hollow spiral extension member E may further include an extension pipe 190 connected between one end 121 and the other end 122 and provided with a plurality of openings.

The extension pipe 190 may be configured such that the extension pipe 190 branches off from a sidewall section of the connection pipe 120 through a communication portion 191. In this case, the communication portion 191 refers to a connection region formed such that an inner flow path of the connection pipe 120 and an inner flow path of the extension pipe 190 communicate with each other. A central axis of the extension pipe 190 may define a right angle with respect to a central axis of the connection pipe 120. However, the present disclosure is not limited thereto. The central axis of the extension pipe 190 may define an acute angle or an obtuse angle with respect to the central axis of the connection pipe 120 or disposed in parallel with the central axis of the connection pipe 120.

In case that the central axis of the extension pipe 190 and the central axis of the connection pipe 120 are disposed in parallel, the ultrasonic transmission medium M may easily leak along gaps between the ultrasonic probe 141 and the plurality of openings of the extension pipe 190 in the gravitational direction. Therefore, the sealing member 150 may be provided in each of the plurality of openings to prevent leakage of the ultrasonic transmission medium M.

The ultrasonic probe 141 may be mounted in each of the plurality of openings of the extension pipe 190. The plurality of openings may each be referred to as the ultrasonic probe mounting portion 124. The plurality of ultrasonic probes 141 respectively mounted in the plurality of ultrasonic probe mounting portions 124 may generate ultrasonic waves with the same phase.

Depending on the purpose of use and manufacturability, the extension pipe 190 may be integrated with the connection pipe 120 or provided in the form of a tubular member different from the connection pipe 120 and coupled to the communication portion 191. In case that a coupling relationship is formed with the connection pipe 120, it is possible to achieve leakage prevention, flow loss reduction, and improvement in structural durability in accordance with the shape, sealing, and reinforcement structure of the communication portion 191. The extension pipe 190 may be made of a material in which a difference in acoustic impedance from the ultrasonic transmission medium M is a preset value or more in order to prevent ultrasonic waves from being radiated to the outside of the extension pipe 190. For example, the extension pipe 190 may be made of metal or glass. However, the present disclosure is not limited thereto.

The extension pipe 190 may include a branch portion 192 configured to divide the communication portion 191, which has a single opening communicating with the connection pipe 120, into the plurality of openings. The branch portion 192 may be positioned at an equal distance from the plurality of openings so that the ultrasonic waves entering the plurality of openings overlap one another in the branch portion 192. The plurality of openings may be referred to as the ultrasonic probe mounting portions 124 in which the ultrasonic probes 141 are mounted.

The ultrasonic probe mounting portions 124 of the extension pipe 190 may be formed as two ultrasonic probe mounting portions 124. In this case, the ultrasonic probe mounting portions 124 may be disposed to face each other based on the branch portion 192. More specifically, the plurality of ultrasonic probe mounting portions 124 may be disposed at equal distances from the branch portion 192 so that the ultrasonic waves respectively entering the plurality of ultrasonic probe mounting portions 124 overlap one another with the same phase in the branch portion 192. As described above, the extension pipe 190 may be formed in a 'Y' shape, a partially curved 'Y' shape, or a curved shape.

The ultrasonic probe mounting portions 124 of the extension pipe 190 may be formed as three or more ultrasonic probe mounting portions 124. The ultrasonic probe mounting portions 124 may be disposed at equal intervals so that the ultrasonic probe mounting portions 124 may be positioned on the same radius based on the branch portion 192. Centers of the ultrasonic probe mounting portions 124 may be positioned at an equal radius from a center of the branch portion 192. An equal angle θ may be formed between centerlines of the adjacent ultrasonic probe mounting portions 124. Therefore, the plurality of ultrasonic probe mounting portions 124 may have shapes arranged at equal intervals on a circumference, and the centers of the ultrasonic probe mounting portions 124 may be positioned and distributed uniformly along the circumference. For example, the angle θ may be 120° in case that the number of ultrasonic probe mounting portions 124 is three, and the angle θ may be 90° in case that the number of ultrasonic probe mounting portions 124 is four.

When the number of ultrasonic probe mounting portions 124 increases as described above, the number of ultrasonic probes 141 mounted in the ultrasonic probe mounting portions 124 may increase, and the total amount of energy of the ultrasonic waves, which overlap one another in the extension pipe 190, may further increase.

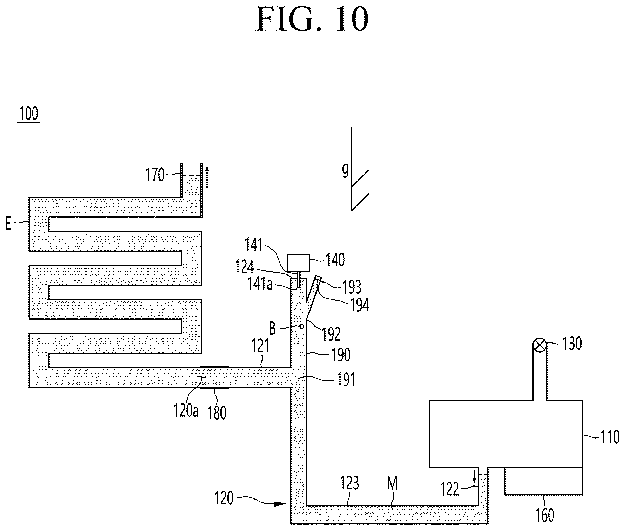

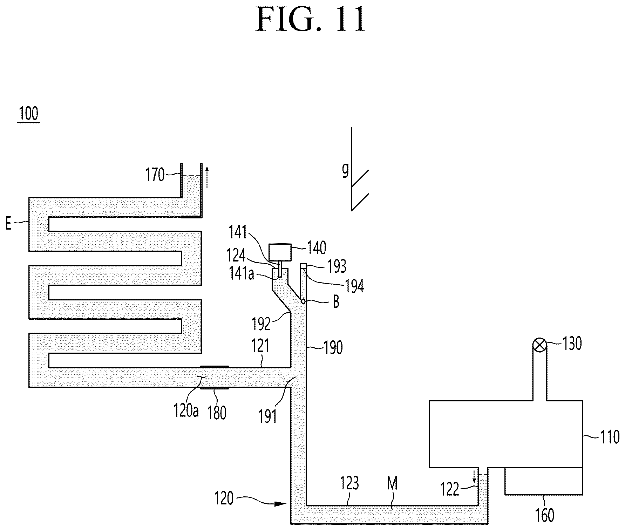

FIG. 10 is a conceptual view of the system 100 for peening the inner surface of the hollow spiral extension member E provided with a bubble discharge portion 193 according to the embodiment of the present disclosure, and FIG. 11 is a conceptual view illustrating another example of the system 100 for peening an inner surface provided with the bubble discharge portion 193 illustrated in FIG. 10.

With reference to FIGS. 10 and 11, the system 100 for peening the inner surface of the hollow spiral extension member E may further include the extension pipe 190 connected between one end 121 and the other end 122 and provided with the plurality of openings.

The extension pipe 190 may include the communication portion 191 configured to communicate with the connection pipe, the ultrasonic probe mounting portion 124 configured to form the space in which the ultrasonic probe 141 configured to generate ultrasonic waves toward the communication portion 191 is mounted, and the bubble discharge portion 193.

The extension pipe 190 may be configured such that the extension pipe 190 branches off from the sidewall section of the connection pipe 120 through the communication portion 191. In this case, the communication portion 191 refers to the connection region formed such that the inner flow path of the connection pipe 120 and the inner flow path of the extension pipe 190 communicate with each other. The central axis of the extension pipe 190 may define a right angle with respect to the central axis of the connection pipe 120. However, the present disclosure is not limited thereto. The central axis of the extension pipe 190 may define an acute angle or an obtuse angle with respect to the central axis of the connection pipe 120.

The bubble discharge portion 193 may be formed to extend in a shape branching off from the branch portion 192 positioned between the communication portion 191 and the ultrasonic probe mounting portion 124. The bubble discharge portion 193 may be formed to protrude integrally from the branch portion 192 or formed by coupling a separate pipe. The bubble discharge portion 193 may be formed to extend upward so that macro-bubbles B occurring during the ultrasonic peening may be discharged to the outside while being raised by buoyancy. The bubble discharge portion 193 may be provided in the form of a cylindrical pipe, and a diameter of the bubble discharge portion 193 may vary depending on sizes of the macro-bubbles B. In the present disclosure, the macro-bubble B refers to a bubble formed to have a size occupying 5% or more of a cross-sectional area of the bubble discharge portion 193. The bubble discharge portion 193 branching off from the extension pipe 190 may be formed such that a length from the branch portion 192 to an outlet, through which the bubbles are discharged, is larger than a height of the hollow spiral extension member E. In this case, the entirety of the inside of the bubble discharge portion 193 is not filled with the ultrasonic transmission medium M, and a partial section disposed in the vicinity of the outlet may be formed to be in contact with the atmosphere.

Meanwhile, a length of the bubble discharge portion 193 may be smaller than the height of the hollow spiral extension member E. In this case, a separation membrane 194 may be provided in the bubble discharge portion 193 and configured to allow gas to pass therethrough while restricting the passage of the ultrasonic transmission medium M. The separation membrane 194 may serve to allow the bubbles, which are generated during the peening process, to be smoothly discharged to the outside while preventing the ultrasonic transmission medium M in the bubble discharge portion 193 from unnecessarily leaking to the outside.

The macro-bubbles B, which are generated during the peening, move to an upper side of the extension pipe 190 as buoyancy is applied. Because the ultrasonic probe 141 in the ultrasonic probe mounting portion 124 emits ultrasonic waves toward the hollow spiral extension member E, the propagation of the bubbles, which move directly in the direction toward the ultrasonic probe mounting portion 124, may be suppressed or hindered by a pressure gradient and flows caused by acoustic radiation of ultrasonic waves. Therefore, the macro-bubbles B cannot be introduced into the ultrasonic probe mounting portion 124 from the branch portion 192, but the macro-bubbles B may be guided to the bubble discharge portion 193 with relatively low resistance and then discharged to the outside.

According to the embodiment of the present disclosure, the ultrasonic probe mounting portion 124 may be formed to be positioned above the communication portion 191 in the vertical direction. More specifically, the communication portion 191 and the ultrasonic probe mounting portion 124 may be disposed on a straight line, and a straight flow path may be formed between the communication portion 191 and the ultrasonic probe mounting portion 124. The bubble discharge portion 193 may be provided in a shape branching off from a sidewall of the flow path. The bubble discharge portion 193 may branch off from the branch portion 192 and be disposed to be inclined upward based on the vertical direction of the flow path. As the bubble discharge portion 193 is formed to be closer to the vertical direction, higher buoyancy may be applied, thereby improving the efficiency in discharging the macro-bubbles B.

According to still another embodiment of the present disclosure, the bubble discharge portion 193 may be formed to be disposed above the communication portion 191 in the vertical direction. The ultrasonic probe mounting portion 124 may be positioned at an upper side offset from the communication portion 191 in a lateral direction. In this case, the flow path, which connects the ultrasonic probe mounting portion 124 and the communication portion 191, may be formed in a shape bent at a predetermined angle. Even though the macro-bubbles B, which are generated during the ultrasonic peening process, are raised upward by buoyancy, the bent structure formed between the ultrasonic probe mounting portion 124 and the communication portion 191 may make it difficult for the macro-bubbles B to be introduced directly into the ultrasonic probe mounting portion 124, and the macro-bubbles B may be guided to the bubble discharge portion 193, which branches off from the branch portion 192, and discharged to the outside.

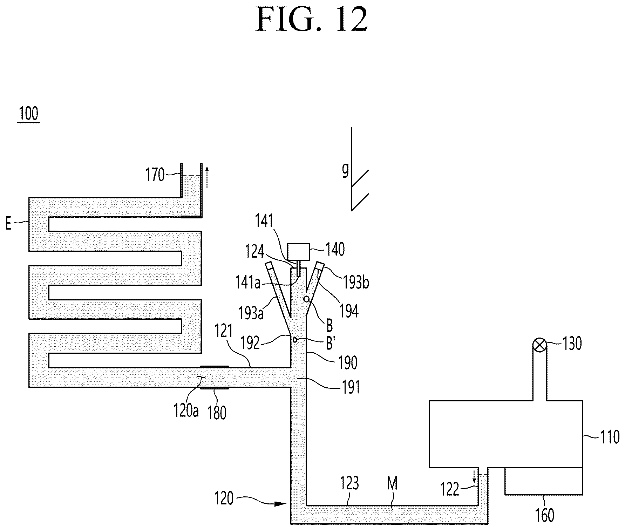

FIG. 12 is a conceptual view of the system 100 for peening an inner surface in which the bubble discharge portion 193 illustrated in FIG. 10 is provided as a plurality of bubble discharge portions 193.

With reference to FIG. 12, the plurality of bubble discharge portions 193 according to still another embodiment of the present disclosure may branch off from different positions on the extension pipe 190.

The bubble discharge portions 193 may include a first discharge portion 193a positioned at a specific position on the extension pipe 190 and configured to discharge fine bubbles B', and a second discharge portion 193b positioned at a position different from that of the first discharge portion 193a on the extension pipe 190 and configured to discharge the macro-bubbles B. Further, the second discharge portion 193b may be disposed in a direction different from that of the first discharge portion 193a. For example, the first discharge portion 193a and the second discharge portion 193b may be respectively disposed at two opposite sides based on the central axis of the extension pipe 190. In the present disclosure, the fine bubble B' refers to a bubble that has a relatively smaller diameter than the macro-bubble B, but has a size sufficient to degrade the ultrasonic transmission efficiency by inducing scattering and absorption effects during the propagation of ultrasonic waves.

The first discharge portion 193a may be disposed at a lower end of the extension pipe 190, i.e., disposed in a region adjacent to the communication portion 191 and serve to discharge the relatively small-sized fine bubbles B' to the outside. The second discharge portion 193b may be positioned above the first discharge portion 193a and serve to discharge the relatively large macro-bubbles B.

According to the embodiment, the first discharge portion 193a and the second discharge portion 193b may be formed to have different inner diameters in order to selectively discharge the bubbles depending on the sizes of the bubbles. Because the second discharge portion 193b may be positioned above the first discharge portion 193a and formed to discharge the relatively large macro-bubbles B, the second discharge portion 193b may be formed to have a larger inner diameter than the first discharge portion 193a.

The present disclosure is not limited to the configuration in which the bubble discharge portions 193 include the first discharge portion 193a and the second discharge portion 193b. As necessary, the bubble discharge portion 193 may be divided into two or more portions from different positions on the extension pipe 190. For example, the plurality of bubble discharge portions 193 may be disposed in a stepwise manner along a length of the extension pipe 190. The respective bubble discharge portions 193 may be formed to have different inner diameters and discharge bubbles, which have different sizes, in a stepwise manner.

Meanwhile, the extension pipe 190 may be divided into a plurality of flow paths from the branch portion 192, some of the plurality of flow paths may be formed as the bubble discharge portions 193, and the remaining flow paths may be formed as the ultrasonic probe mounting portions 124. The ultrasonic probes 141 may be respectively installed in the plurality of openings of the ultrasonic probe mounting portions 124, and ultrasonic waves generated by the ultrasonic probes 141 overlap one another in the branch portion 192, thereby improving ultrasonic peening efficiency.

For example, in case that three flow paths branch off from the branch portion 192, the flow path positioned at two opposite sides may be connected to the ultrasonic probe mounting portions 124, and the flow path positioned at a center may constitute the bubble discharge portion 193. The ultrasonic probe mounting portion 124 may be formed to be inclined upward in the lateral direction with respect to the branch portion 192, and the bubble discharge portion 193 may be positioned above the branch portion 192 in the vertical direction.

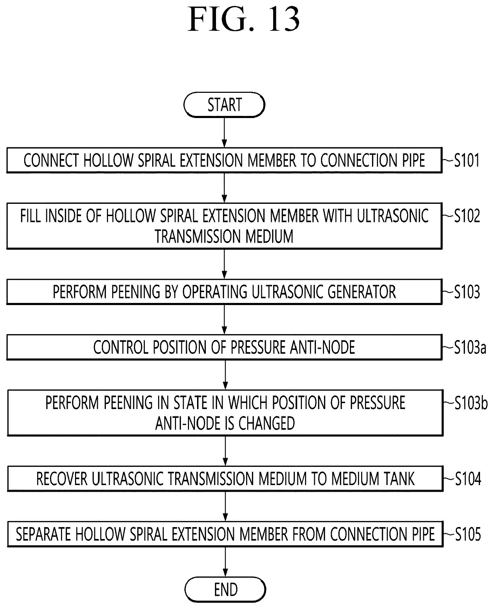

Hereinafter, a method of peening the hollow spiral extension member E using the system 100 for peening an inner surface according to another embodiment of the present disclosure will be described with reference to FIG. 13.

FIG. 13 is a flowchart illustrating a method of peening the hollow spiral extension member E using the system 100 for peening an inner surface according to another embodiment of the present disclosure.

With reference to FIG. 13, the peening method using the system 100 for peening an inner surface of a hollow spiral extension member includes step S101 of connecting the hollow spiral extension member E to the connection pipe 120, S102 of filling the inside of the hollow spiral extension member E with the ultrasonic transmission medium M, step S103 of performing peening by operating the ultrasonic generator 140, step S104 of recovering the ultrasonic transmission medium M to the medium tank 110, and step S105 of separating the hollow spiral extension member E from the connection pipe 120.

First, as illustrated in FIGS. 1 and 2, in step S101 of connecting the hollow spiral extension member E to the connection pipe 120, one end 121 of the hollow spiral extension member E is connected to the opening 120a of the connection pipe 120. In this case, the pressure in the medium tank 110 and the pressure in the connection pipe 120 may be atmospheric pressure. Further, the connecting tube 180 may be installed at one end of the connection pipe and detachably connected to the lower end of the hollow spiral extension member. In this case, the level of the ultrasonic transmission medium M may be formed to be lower than the opening 120a of the connecting tube 180 to prevent the ultrasonic transmission medium M from overflowing through the opening 120a of the connecting tube 180. The pressure in the medium tank 110 and the pressure in the connection pipe 120 may be adjusted by the pressure adjuster 130.

Next, as illustrated in FIG. 3, in step S102 of filling the inside of the hollow spiral extension member E with the ultrasonic transmission medium M, the inside of the hollow spiral extension member E is filled with the ultrasonic transmission medium M by controlling the pressure adjuster 130.

Next, as illustrated in FIG. 4, in step S103 of performing the peening by operating the ultrasonic generator 140, the ultrasonic cavitation peening is performed on the inner surface of the hollow spiral extension member E by operating the ultrasonic generator 140.

Next, as illustrated in FIG. 5, in step S104 of recovering the ultrasonic transmission medium M to the medium tank 110, the ultrasonic transmission medium M, with which the inside of the hollow spiral extension member E is filled, is recovered to the medium tank 110 by controlling the pressure adjuster 130. For example, the atmospheric pressure may be formed in the medium tank 110 and the connection pipe 120 by stopping the operation of the pressure adjuster 130, and the ultrasonic transmission medium M may be recovered by discharging the ultrasonic transmission medium M from the inside of the hollow spiral extension member E by gravity. According to another method of recovering the ultrasonic transmission medium M, negative pressure may be formed in the medium tank 110 by the pressure adjuster 130, such that the ultrasonic transmission medium M may be discharged from the inside of the hollow spiral extension member E. In the case of the above-mentioned method of recovering the ultrasonic transmission medium M, there occurs no constraint condition related to a relative height difference between the medium tank 110 and the connecting tube 180. That is, during a process of configuring the system 100 for peening an inner surface of a hollow spiral extension member, a relative height difference between the medium tank 110 and the connecting tube 180 may be freely set.

Lastly, as illustrated in FIG. 6, in step S105 of separating the hollow spiral extension member E from the connection pipe 120, one end of the hollow spiral extension member E connected to the opening 120a of the connection pipe 120 is removed from the connection pipe 120.

Meanwhile, step S103 of performing the peening by operating the ultrasonic generator 140 may include step S103a of controlling the positions of the pressure anti-nodes, and step S103b of performing the peening in a state in which the positions of the pressure anti-nodes P1, P2, and P3 are changed.

In step S103a of controlling the positions of the pressure anti-nodes, the positions of the pressure anti-nodes P1, P2, and P3, which are the ultrasonic cavitation peening points, by controlling the pressure adjuster 130. In this case, the change in positions of the pressure anti-nodes P1, P2, and P3 may be performed by adjusting the filling level of the ultrasonic transmission medium M, with which the hollow spiral extension member E is filled, by controlling the pressure adjuster 130.

In step S103b of performing the peening in the state in which the position of the pressure anti-node is changed, the ultrasonic cavitation peening is performed on the inner surface of the hollow spiral extension member E at the pressure anti-node position by operating the ultrasonic generator 140 in the state in which the filling level of the ultrasonic transmission medium M, with which the hollow spiral extension member E is filled, is adjusted.

According to the above-mentioned method of peening the hollow spiral extension member E using the system 100 for peening an inner surface, the ultrasonic transmission medium M for the ultrasonic cavitation peening may be stably supplied into the hollow spiral extension member E and recovered, and the peening operation may be more easily performed on the inner surface of the hollow spiral extension member E by controlling the peening region of the inner surface of the hollow spiral extension member E by changing the positions of the pressure anti-nodes, which are the peening points, by adjusting the filling level of the ultrasonic transmission medium M in the state in which the ultrasonic transmission medium M is supplied into the hollow spiral extension member E.

The foregoing is merely exemplary, and various modifications may be made by those skilled in the art to which the present disclosure pertains, without departing from the scope and technical spirit of the described embodiments. The above-mentioned embodiments may be implemented individually or in any combination.

### [Description of Reference Numerals]

100, 200: System for peening inner surface of hollow spiral extension member
110: Medium tank
120: Connection pipe
120a: Opening
121: One end
122: The other end
123: Extension portion
124: Ultrasonic probe mounting portion
125: Tapered portion
126: Recess portion
130: Pressure adjuster
140: Ultrasonic generator
141: Ultrasonic probe
141a: Probe tip
150: Sealing member
160: Cooler
170: Extension tube
180: Connecting tube
190: Extension pipe
191: Communication portion
192: Branch portion
193: Bubble discharge portion
193a: First discharge portion
193b: Second discharge portion
194: Separation membrane
210: Pressing jig
E: Hollow spiral extension member
M: Ultrasonic transmission medium
P1, P2, P3: Pressure anti-node

## Claims

1. A system for peening an inner surface of a hollow spiral extension member, the system comprising:
a medium tank configured to accommodate an ultrasonic transmission medium;
a connection pipe having one end connected to a hollow spiral extension member, and the other end connected to the medium tank, the connection pipe being configured to form a movement flow path for the ultrasonic transmission medium from the medium tank into the hollow spiral extension member;
a pressure adjuster connected to the medium tank and configured to control a flow of the ultrasonic transmission medium by adjusting pressure in the medium tank; and
an ultrasonic generator installed in the connection pipe and configured to generate ultrasonic waves toward the inside of the hollow spiral extension member in the connection pipe so that ultrasonic cavitation peening is performed on an inner surface of the hollow spiral extension member in a state in which the inside of the hollow spiral extension member is filled with the ultrasonic transmission medium.

2. The system of claim 1, wherein a connecting tube is installed at one end of the connection pipe and detachably connected to a lower end of the hollow spiral extension member.

3. The system of claim 2, wherein an ultrasonic probe of the ultrasonic generator, which generates ultrasonic waves, is disposed to be directed toward an opening of the connecting tube.

4. The system of claim 2, wherein an upper end of the medium tank is positioned to be lower than the connecting tube, and the other end of the connection pipe is connected to a bottom portion of the medium tank so that the ultrasonic transmission medium is completely discharged from the hollow spiral extension member by gravity when pressurization is released in the state in which the inside of the hollow spiral extension member is filled with the ultrasonic transmission medium by the pressurization of the pressure adjuster.

5. The system of claim 1, further comprising:
an extension tube detachably coupled to an upper end of the hollow spiral extension member and formed to extend upward so that the inside of the hollow spiral extension member is fully filled with the ultrasonic transmission medium and a position of a pressure anti-node is stably controlled in an entire inner region of the hollow spiral extension member.

6. The system of claim 5, wherein the pressure adjuster is configured to adjust a filling level of the ultrasonic transmission medium in the extension tube by adjusting pressure.

7. The system of claim 6, wherein the pressure adjuster is configured to adjust the filling level of the ultrasonic transmission medium so that the ultrasonic cavitation peening is performed on the inner surface of the hollow spiral extension member in a state in which a level surface of the ultrasonic transmission medium in the extension tube exceeds an end surface of the extension tube and the ultrasonic transmission medium leaks to the outside.

8. The system of claim 1, further comprising:
a cooler installed in the medium tank and configured to maintain a temperature of the ultrasonic transmission medium accommodated in the medium tank to a preset temperature or lower to prevent vapor of the ultrasonic transmission medium from being introduced into a cavity that is formed during the ultrasonic cavitation peening.

9. The system of claim 1, wherein an ultrasonic probe of the ultrasonic generator, which generates ultrasonic waves, is configured to penetrate the connection pipe so that the ultrasonic probe is at least partially disposed in the connection pipe,
wherein a portion of the connection pipe penetrated by the ultrasonic probe is installed with:
a sealing member for sealing; and
a coating member made of a metallic or nonmetallic material and configured to be coated onto a surface of one end of the ultrasonic probe to protect the surface of one end of the ultrasonic probe, and
wherein the sealing member is disposed at a position of a pressure anti-node of the ultrasonic probe at which a vibrational displacement becomes 0 when ultrasonic waves are generated.

10. The system of claim 1, wherein the hollow spiral extension member is a hollow coil spring, and
wherein the system further comprises a pressing jig configured to press an upper side of the hollow coil spring downward in a state in which the pressing jig supports a lower side of the hollow coil spring to maintain a state in which the hollow coil spring is compressed during the ultrasonic cavitation peening process.

11. The system of claim 1, further comprising:
an extension pipe connected between one end and the other end and provided with a plurality of openings,
wherein ultrasonic probes are respectively mounted in the plurality of openings.

12. The system of claim 11, wherein the extension pipe comprises a branch portion configured to divide a communication portion, which is provided with a single opening communicating with the connection pipe, into the plurality of openings, and
wherein the branch portion is positioned at an equal distance from respectively each of the plurality of openings so that the ultrasonic waves respectively entering the plurality of openings overlap one another in the branch portion.

13. The system of claim 1, further comprising:
an extension pipe connected between one end and the other end,
wherein the extension pipe comprises:
a communication portion configured to communicate with the connection pipe;
an ultrasonic probe mounting portion configured to form a space in which an ultrasonic probe configured to generate ultrasonic waves toward the communication portion is mounted; and
a bubble discharge portion extending in a shape branching between the communication portion and the ultrasonic probe mounting portion so that bubbles, which are generated during peening by the ultrasonic probe, are discharged while being raised by buoyancy.

14. A method of peening a hollow spiral extension member using the system for peening an inner surface according to claim 1, the method comprising:
connecting a lower end of the hollow spiral extension member to the connection pipe;
filling the inside of the hollow spiral extension member with the ultrasonic transmission medium by controlling the pressure adjuster;
performing the ultrasonic cavitation peening on the inner surface of the hollow spiral extension member by operating the ultrasonic generator;
recovering the ultrasonic transmission medium, with which the inside of the hollow spiral extension member is filled, to the medium tank by controlling the pressure adjuster; and
separating the hollow spiral extension member from the connection pipe.

15. The method of claim 14, wherein the performing of the ultrasonic cavitation peening comprises changing a position of a pressure anti-node, which is an ultrasonic cavitation peening point, by controlling the pressure adjuster.
